Europäisches Patentamt

European Patent Office

Office européen des brevets

(19)

(11) Publication number: **0 054 319**
**B1**

# EUROPEAN PATENT SPECIFICATION

(12)

(45) Date of publication of patent specification: **18.07.84**   (51) Int. Cl.³: **F 24 J 3/02**

(21) Application number: **81201285.4**

(22) Date of filing: **20.11.81**

(54) Solar collector comprising an absorber plate which exchanges heat with the evaporator section of a heat pipe.

(30) Priority: **11.12.80 NL 8006716**

(43) Date of publication of application:
**23.06.82 Bulletin 82/25**

(45) Publication of the grant of the patent:
**18.07.84 Bulletin 84/29**

(84) Designated Contracting States:
**DE FR GB IT NL**

(56) References cited:
**EP - A - 0 012 692**
**FR - A - 2 385 051**
**US - A - 4 127 105**

(73) Proprietor: **N.V. Philips' Gloeilampenfabrieken**
**Groenewoudseweg 1**
**NL-5621 BA Eindhoven (NL)**

(72) Inventor: **van der AA, Herman Henricus Maria**
**INT. OCTROOIBUREAU B.V. Prof. Holstlaan 6**
**NL-5656 AA Eindhoven (NL)**

(74) Representative: **Melio, Jan Dirk et al,**
**INTERNATIONAAL OCTROOIBUREAU B.V. Prof.**
**Holstlaan 6**
**NL-5656 AA Eindhoven (NL)**

The file contains technical information
submitted after the application was filed and not
included in this specification

Courier Press, Leamington Spa, England.

## Description

The invention relates to a solar collector comprising an absorber plate which absorbs solar heat and which exchanges heat with the evaporator section of a heat pipe, the evaporator section being surrounded by a tube which is enclosed by an evacuated, transparent envelope, and the condenser section of the heat pipe projecting from the envelope at one end thereof to exchange heat with a medium to be heated, one end of said tube being closed whilst its other end is connected to said end of the envelope.

A solar collector of the kind set forth is known from the US Patent 4.059.093. In Figure 7 of this prior specification there is shown a solar collector in which the absorber plate is mounted on the heat pipe and the two components are surrounded by a transparent tube, which is formed by the inner wall of a double-walled envelope. The heat pipe passes through a cork or plastic closure member, which is positioned at the open end of the envelope to provide support for the heat pipe. The closure member is not suitable to close the tube hermetically.

A drawback of the known collector is that the tube is not evacuated.

It is the object of the invention to improve the solar collector of the type mentioned in the opening paragraph.

The solar collector in accordance with the invention is characterized in that the absorber plate is mounted on the outer side of the tube in the evacuated space between the tube and the envelope and a thermally conductive medium is present between the tube and the evaporator section of the heat pipe.

Thus, a solar collector is obtained which is composed of two distinct parts of which one part comprises the heat pipe and the other part comprises the evacuated envelope containing the absorber plate.

Advantages of the collector in accordance with the invention are: the possibility of separate manufacture of the part comprising the envelope and absorber and the part comprising the heat pipe; simplified and less vulnerable assembly of these two parts providing the possibility of axial and angular adjustment of the two parts with respect to each other. It is thus possible to use different types of heat pipe for one type of envelope and absorber, depending on the operating conditions. This makes it possible to manufacture the parts in larger series. During transport, the envelope and the heat pipe may remain separated, so that the risk of damage is reduced. A further advantage is that a broken envelope can be replaced easily by a new one.

Even though the tube enclosing the evaporator section of the heat pipe may also be made of glass, this tube is preferably made of metal for reasons of thermal conductivity.

It is noted that in the French Patent Application 2.385.051 another kind of solar collector is disclosed. In Figure 3 of this specification there is shown a collector, which has a heat pipe having an evaporator section covered with a layer of absorbing material and surrounded by and in contact with an evacuated Dewar-type glass tube. Such arrangement has no resemblance to the construction according to the invention in which a tube closed at one end surrounds and is spaced from the evaporator section of a heat pipe, with a thermally conductive medium filling the space between the tube and the heat-pipe evaporator section.

In order to ensure that the gap between the tube and the evaporator section remains suitably filled with thermally conductive medium, the medium in accordance with the invention preferably consists of a liquid, preferably silicon oil. In view of the comparatively low heat flow density, no severe requirements are imposed on this medium and silicon oil is very suitable in this respect.

It is noted, that the use of thermal joint compound between two surfaces is known from the US Patent 4.127.105. In this patent a solar collector panel is shown which has hardly anyresemblance to the device according to the invention. The panel includes a flat collector plate on which is mounted a plurality of metal conductors in which heat pipes are inserted. A thermal joint compound is applied between the heat pipes and the conductors.

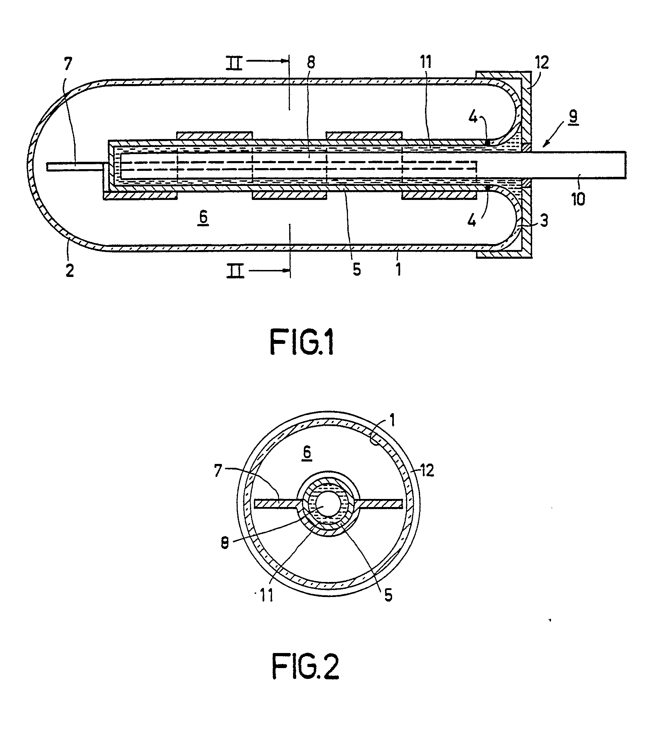

An embodiment of the invention will be described in detail with reference to the drawing. Figures 1 and 2 are diagrammatic sectional views, taken at right angles to each other, of a solar collector according to the invention. Figure 2 being taken on the line II—II in Figure 1.

The reference numeral 1 denotes a tubular glass envelope which is closed at one end 2 by a wall and which at the other end 3 has an inwardly turned annular wall which is connected at the area 4 to one end of a metal tube 5 within the envelope 1, the other end of the tube 5 being closed. The space 6 between the envelope 1 and the tube 5 is evacuated in order to counteract heat losses by conduction. On the metal tube 5 there is provided an absorber plate 7 which comprises a black layer which suitably absorbs the incident solar heat.

The evaporator section 8 of a heat pipe 9 is accommodated in the tube 5. The condenser section 10 of the heat pipe 9 projects from envelope 1 and can be arranged to exchange heat with a medium to be heated.

The gap between the evaporator section 8 and the tube 5 is filled with a medium 11 which suitably conducts heat, in this case silicon oil. In order to prevent leakage of the silicon oil, a cover 12 is arranged on the end 3 of the envelope 1 around the heat pipe 9. A collector is thus obtained which transfers the solar heat incident on the absorber plate 7 to the evaporator section 8 of the heat pipe 9 *via* the tube 5 and the silicon oil 11. The medium in the heat pipe 9 will evaporate and the vapour will condense at the area of the condenser 10, thus giving up heat to the medium to be heated. The flow of heat from the absorber plate 7 to the evaporator section 8 is not significantly influenced by the silicon oil. In a practical embodiment, comprising a heat pipe having an external diameter of 6 mm and a tube 5 having an internal diameter of 6.6 mm, a temperature difference of only 4°C occurred across the gap at a heat flow of 50 Watts, which would have a negligibly small effect on the overall efficiency of the collector.

## Claims

1. A solar collector comprising an absorber plate (7) which absorbs solar heat and which exchanges heat with the evaporator section (8) of a heat pipe (9), the evaporator section (8) being surrounded by a tube (5) which is enclosed by an evacuated, transparent envelope (1), and the condenser section (10) of the heat pipe (9) projecting from the envelope (1) at one end thereof to exchange heat with a medium to be heated, one end of said tube (5) being closed whilst its other end is connected to said end of the envelope (1), characterized in that the absorber plate (7) is mounted on the outer side of the tube (5) in the evacuated space (6) between the tube (5) and the envelope (1) and a thermally conductive medium (11) is present between the tube (5) and the evaporator section (8) of the heat pipe (9).

2. A solar collector as claimed in Claim 1, characterized in that the tube (5) is made of metal.

3. A solar collector as claimed in Claim 1 or 2, characterized in that the medium (11) between the tube (5) and the evaporator section (8) of the heat pipe (9) is a liquid, a seal being arranged between the heat pipe (9) and said end (3) of the envelope (1).

## Patentansprüche

1. Solarkollektor mit einer Absorberplatte (7), die Sonnenwärme absorbiert und mit dem Verdampferteil (8) eines Wärmerohres (9) Wärme austauscht, wobei der Verdampferteil (8) von einem Rohr (5) umgeben ist, welches durch eine evakuierte transparente Hülle (1) eingeschlossen ist, und wobei der Kondensatorteil (10) des Wärmerohres (9) an nur einem Ende aus der Hülle (1) herausragt und dort mit einem zu erwärmenden Medium in Wärmeaustausch steht, wobei ein Ende des genannten Rohres (5) geschlossen ist, während das andere Ende mit dem genannten Ende der Hülle (1) verbunden ist, dadurch gekennzeichnet, dass die Absorberplatte (7) an der aussenseite des Rohres (5) in dem evakuierten Raum (6) zwischen dem Rohr (5) und der Hülle (1) angeordnet ist und dass es zwischen dem Rohr (5) und dem Verdampferteil (8) des Wärmerohres (9) ein thermisch leitendes Medium (11) gibt.

2. Solarkollektor nach Anspruch 1, dadurch gekennzeichnet, dass das Rohr (5) aus Metall besteht.

3. Solarkollektor nach Anspruch 1 oder 2, dadurch gekennzeichnet, dass das Medium (11) zwischen dem Rohr (5) und dem Verdampferteil (8) des Wärmerohres (9) eine Flüssigkeit ist, wobei zwischen dem Wärmerohr (9) und dem genannten Ende (3) der Hülle (1) eine Abdichtung vorgesehen ist.

## Revendications

1. Collecteur solaire comportant une plaque d'absorbeur (7) qui absorbe de la chaleur solaire et qui échange la chaleur avec la partie d'évaporateur (8) d'un caloduc (9), la partie d'évaporateur (8) étant entourée d'un tube (5), qui est enfermé par une enveloppe transparente vidée d'air (1), la partie de condenseur (10) du caloduc (9) saillant de l'enveloppe (1) à une extrémité de cette dernière pour échanger de la chaleur avec un fluide à chauffer, une extrémité dudit tube (5) étant fermée, alors que l'autre extrémité est reliée à ladite extrémité de l'enveloppe (1), caractérisé en ce que la plaque d'absorbeur (7) est montée sur la face extérieure du tube (5) dans l'espace vidé d'air (6) entre le tube (5) et l'enveloppe (1) et qu'un fluide thermiquement conducteur (11) est présent entre le tube (5) et la partie d'évaporateur (8) du caloduc (9).

2. Collecteur solaire selon la revendication 1, caractérisé en ce que le tube (5) est réalisé en métal.

3. Collecteur solaire selon la revendication 1 ou 2, caractérisé en ce que le fluide (11) entre le tube (5) de la partie d'évaporateur (8) du caloduc (9) est un liquide, un scellement étant appliqué entre le caloduc (9) et ladite extrémité (3) de l'enveloppe (1).

FIG.1

FIG.2